# NEUE EUROPÄISCHE PATENTSCHRIFT

(11) **EP 1 240 259 B2**
(45) Veröffentlichungstag und Bekanntmachung des Hinweises auf die Entscheidung über den Einspruch: **10.04.2013**
(45) Hinweis auf die Patenterteilung: 30.08.2006
(21) Anmeldenummer: 00981241.3
(22) Anmeldetag: 08.11.2000
(51) Int. Cl.: C09D 7/12

(54) **UNBUNTE LACKE, VERFAHREN ZU IHRER HERSTELLUNG UND IHRE VERWENDUNG**
ACHROMATIC LACQUERS, A METHOD FOR PRODUCING SAME AND THE USE THEREOF
VERNIS ACHROMATIQUES, LEUR PROCEDE DE PRODUCTION ET LEUR UTILISATION

(30) Priorität: 06.12.1999 DE 19958716
(43) Veröffentlichungstag der Anmeldung: 18.09.2002
(73) Patentinhaber: BASF Coatings GmbH, 48165 Münster (DE)
(72) Erfinder: MANGELS, Ines, 48165 Münster (DE); BRÜGGEMANN, Herrmann, 48165 Münster (DE); WESSLING, Elisabeth, 48282 Emsdetten (DE); WESTERMANN, Sylvia, 48165 Münster (DE); WALDMANN, Jutta, 48329 Havixbeck (DE)
(74) Vertreter: Leifert, Elmar
(86) Internationale Anmeldenummer: PCT/EP2000/011014
(87) Internationale Veröffentlichungsnummer: WO 2001/042375

(56) Entgegenhaltungen:
- DE-A- 3 722 748
- GB-A- 675 956
- JP-A- 05 032 938
- JP-A- 05 156 199
- US-A- 4 170 486
- US-A- 4 177 183
- US-A- 5 006 597
- 'Römpp-Lexikon Lacke und Druckfarben', 1998, GEORG THIEME VERLAG, STUTTGART Seiten 524 - 528

## Beschreibung

Die vorliegende Erfindung betrifft die Verwendung unbunter wäßriger, insbesondere tiefschwarzer, Lacke als Füller oder Basislack. Die erfindungsgemäße Lacke sind Füller, Unidecklack oder Basislack.

Unbunte Farben unterscheiden sich von den bunten durch das Fehlen von Buntton und Buntheit; sie zeigen nur Helligkeit. Zu den unbunten Farben gehören Schwarz und Weiß sowie die dazwischen liegenden bzw. die daraus zu mischenden Grautöne (vgl. Römpp Lexikon Lacke und Druckfarben, Georg Thieme Verlag, Stuttgart, New York, 1998 »Unbuntpunkt«, Seite 590). Im Rahmen der vorliegenden Erfindung werden unter unbunten Farben indes Schwarz und Grautöne verstanden.

Tiefschwarze Farbtöne zu erzeugen, ist ein erklärtes Ziel in der Lackindustrie. Indes bereitet dies insbesondere bei wäßrigen Lacken große Schwierigkeiten. Im allgemeinen wird durch die Zugabe von Netz- und Dispergiermitteln eine Verbesserung der Pigmentbenetzung erzielt. Hierdurch wird die Farbstärke erhöht, wodurch man reinere, tiefere Farbtöne erhält. Dieses Verfahren führt aber im Falle von Rußpigmenten, die die Basis unbunter, insbesondere tiefschwarzer Lacke bilden, nicht zu dem gewünschten Erfolg.

Aus dem deutschen Patent DE-C-197 56 465 sind tiefschwarze konventionelle und wäßrige Lacke bekannt, die Rußpigmente enthalten. Die Rußpigmente enthalten, bezogen auf ihr Gesamtgewicht, 0,1 bis 30 Gew.-% Silizium, berechnet als Siliziumdioxid. Diese Rußpigmente werden erhalten, indem man geeignete siliziumhaltige Verbindungen dem Rußrohstoff zusetzt. Alternativ besteht die Möglichkeit, die siliziumhaltigen Verbindungen kurz vor oder direkt in der Rußbildungszone dem Eduktstrom des jeweiligen Rußprozesses zuzuführen. Geeignete siliziumhaltige Verbindungen sind siliziumorganische Verbindungen wie Organosilane, Organochlorsilane, Siloxane und Silazane. Insbesondere sind Siliziumtetrachlorid, Siloxane und Silazane geeignet. Bevorzugt werden Kieselsäuremethyl- oder -ethylester, Siloxane und Silazane für die Herstellung der siliziumhaltigen Ruße verwendet.

Nachteilig für dieses bekannte Verfahren ist, daß die Modifikation der Rußpigmente im Rahmen des Rußprozesses erfolgt, so daß die Eigenschaften der betreffenden Rußpigmente durch den vergleichsweise komplexen Herstellprozeß als solchen festgelegt werden und nicht durch eine einfache gezielte Modifikation üblicher und bekannter kommerzieller Rußpigmente im Rahmen der Lackherstellung. Die gezielte Herstellung von Rußpigmenten, die für einen gegebenen Anwendungszweck besonders gut geeignet sind, ist daher sehr aufwendig. Hinzukommt noch, daß sich die siliziumorganischen Verbindungen bei den hohen Temperaturen, die bei der Herstellung von Ruß angewandt werden, in schwer vorhersagbarer Weise verändem, was die gezielte Herstellung modifizierter Rußpigmente weiter erschwert.

Aufgabe der vorliegenden Erfindung ist es, unbunte wäßrige, insbesondere tiefschwarze, Lacke als Füller oder Basislack bereitzustellen, die sich in einfacher Weise gezielt herstellen lassen und deren Rußpigmente nicht im Rahmen des Rußprozesses, sondem im Rahmen der Lackherstellung in einfacher Weise modifiziert werden können, so daß eine Verbesserung der Schwarztiefe resultiert, ohne daß die anderen wesentlichen anwendungstechnischen Eigenschaften der betreffenden Lacke in Mitleidenschaft gezogen werden.

Demgemäß wurde die Verwendung unbunter wäßriger Lacke als Füller oder Basislack gefunden, die mindestens ein Bindemittel, mindestens ein Rußpigment und mindestens ein Silicon enthalten.

Weitere erfindungsgemäße Gegenstände gehen aus der nachfolgenden Beschreibung hervor.

Im Hinblick auf den Stand der Technik war es überraschend und für den Fachmann nicht vorhersehbar, daß die Aufgabe, die der vorliegenden Erfindung zugrunde liegt, durch die erfindungsgemäße Verwendung gelöst werden konnte. Anders gesagt: es war überraschend, daß mit Hilfe der einfach zu realisierenden Maßnahme der Zugabe eines Additivs eine anwendungstechnisch und wirtschaftlich attraktive Alternative zu dem komplexen Herstellprozeß siliziumhaltiger Rußpigmente geschaffen werden konnte. Ganz besonders überraschend war, daß die Zugabe der Silicone nicht zu den hinlänglich bekannten unerwünschten Nebeneffekten von Silicon-Additiven wie Schaumbildung, Benetzungs- und Haftungsprobleme beim Überlackieren (vgl. das Lehrbuch »Lackadditive« von Johan Bieleman, Wiley-VCH, Weinheim, New York, 1998, Seite 139) und/oder zu Lackstörungen wie Krater führt (vgl. hierzu Römpp Lexikon Lacke und Druckfarben, Georg Thieme Verlag, Stuttgart, New York, 1998, »Silicon-Additive«, Seite 524).

Der erfindungswesentliche Bestandteil der erfindungsgemäß zu verwendenden Lacke ist mindestens ein Silicon. Silicone werden bekanntermaßen von der Fachwelt auch als Siliconöle, Polysiloxane, Polyorganosiloxane oder Organosiloxane bezeichnet. Sie sind synthetischen polymere Verbindungen, in denen die Siliziumatome über Sauerstoffatome ketten- und/oder netzartig verknüpft und die restlichen Valenzen des Siliziums durch Kohlenwasserstoffreste, vorzugsweise Methyl-, Phenyl-, Ethyl- und/oder Propylgruppen, insbesondere Methylgruppen, abgesättigt sind. Die Silicone können je nach Kettenlänge, Verzweigungsgrad und Substituenten niedrig- bis hochviskose Öle oder fest sein. Des weiteren können sie mit Polyethern modifiziert sein. Ergänzend wird auf Römpp Lexikon Lacke und Druckfarben, Georg Thieme Verlag, Stuttgart, New York, 1998, »Silicon-Additive«, Seite 524, »Silicon"Copolymere«, Seite 525 und »silicone«, Seite 525, verwiesen.

Erfindungsgemäß werden lineare flüssige Silicone bzw. Siliconöle verwendet, die 10 bis 100, vorzugsweise 11 bis 80, bevorzugt 12 bis 70, besonders bevorzugt 13 bis 60, ganz besonders bevorzugt 14 bis 55 und insbesondere 15 bis 50 Si-O-Einheiten aufweisen. Bevorzugt werden Silicon-Copolymere verwendet, die mit Polyethem, insbesondere Poly(ethylenoxid-co-propylenoxid), modifiziert sind. Besonders bevorzugte Silicone sind Kopf-Kopf-modifiziert, wobei die Polyetherketten über Allylgruppen mit den Siloxanketten verknüpft sind. Ganz besonders bevorzugte Silicone enthalten Polyetherketten, die aus 10 bis 90, bevorzugt 15 bis 85 Mol-%, an Ethylenoxideinheiten und 90 bis 10, bevorzugt 85 bis 15 Mol-%, an Propylenoxideinheiten aufgebaut sind. Vorzugsweise weisen die Polyetherketten ein zahlenmittleres Molekulargewicht Mn von 500 bis 3.000, bevorzugt 600 bis 2.500, besonders bevorzugt 800 bis 2.200 und insbesondere 900 bis 2.000 auf. Vorzugsweise weisen die Silicone insgesamt ein zahlenmittleres Molekulargewicht Mn von 2.000 bis 10.000, bevorzugt 2.100 bis 9.500, besonders bevorzugt 2.200 bis 9.000, ganz besonders bevorzugt 2.300 bis 8.500 und insbesondere 2.400 bis 8.000 auf.

Besonders gut geeignete Silicone enthalten beispielsweise Ketten mit 18 Si-O-Einheiten und 2 Kopf-Kopfverknüpfte Polyetherketten mit einem zahlenmittlere Molekulargewicht Mn von 1.250 und einem Gehalt von 80 Mol-% Ethylenoxideinheiten und 20 Mol-% Propylenoxideinheiten oder Ketten mit 48 Si-O-Einheiten und 2 Kopf-Kopf verknüpfte Polyetherketten eines zahlenmittleren Molekutargewichts Mn von 1.860 und einem Gehalt von 50 Mol-% Ethylenoxideinheiten und 50 Mol-% Propylenoxideinheiten.

Die Silicone der genannten Art sind üblich und bekannt und am Markt erhältlich.

Der Gehalt der Silicone in den erfindungsgemäß zu verwendenden Lacken kann sehr breit variieren und richtet sich zum einen nach dem jeweils verwendeten Rußpigment und zum anderen nach der Verträglichkeit der übrigen Bestandteile der erfindungsgemäß zu verwendenden Lacke mit den Siliconen. Der Fachmann kann daher den Gehalt anhand seines allgemeinen Fachwissens gegebenenfalls unter Zuhilfenahme einfacher Vorversuche leicht ermitteln. Vorzugsweise liegt der Gehalt bei 0,01 bis 2,0, bevorzugt 0,02 bis 1,5, besonders bevorzugt 0,03 bis 1,2, ganz besonders bevorzugt 0,03 bis 1,0 und insbesondere 0,04 bis 0,8 Gew.-%, jeweils bezogen auf die Gesamtmenge des erfindungsgemäß zu verwendenden Lacks.

Der weitere erfindungswesentliche Bestandteil des erfindungsgemäß zu verwendenden Lacks ist mindestens ein Rußpigment. Rußpigmente werden von der Fachwelt auch als Pigmentruße, Farbruße oder Kohlenstoff-Pigmente bezeichnet. Üblicherweise werden sie nach dem Fumaceruß-, Degussa-Gasruß- und Flammruß-Verfahren hergestellt. Im allgemeinen weisen sie Primärteilchengrößen von 10 bis 100 nm auf. Ergänzend wird auf Römpp Lexikon Lacke und Druckfarben, Georg Thieme Verlag, Stuttgart, New York, 1998, »Industrieruße«, Seiten 300 und 301, sowie »Pigmentruße«, Seiten 452 und 453, verwiesen. Welches Rußpigment in dem erfindungsgemäßen Lack angewandt wird, richtet sich in erster Linie nach dem gewünschten Farbton oder der gewünschten Farbtiefe und dem jeweiligen Verwendungszweck. Der Fachmann kann daher die jeweils am besten geeigneten Rußpigmente aufgrund seines allgemeinen Fachwissens gegebenenfalls unter Zuhilfenahme einfacher Vorversuche leicht ermitteln. Der Gehalt der Rußpigmente in den erfindungsgemäß zu verwendenden Lacken kann breit variieren. Vorzugsweise liegt er bei 0,5 bis 20, bevorzugt 1,0 bis 18, besonders bevorzugt 1,2 bis 16, ganz besonders bevorzugt 1,3 bis 15 und insbesondere 1,4 bis 14 Gew.-%, jeweils bezogen auf den erfindungsgemäß zu verwendenden Lack.

Der weitere wesentliche Bestandteil des erfindungsgemäß zu verwendenden Lacks ist mindestens ein Bindemittel. Zu dem Begriff wird auf die Römpp Lexikon Lacke und Druckfarben, Georg Thieme Verlag, Stuttgart, New York, 1998, »Bindemittel«, Seiten 73 und 74, verwiesen.

Beispiele geeigneter Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE-A-197 36 535 beschriebenen, Polyester, insbesondere die in den Patentschriften DE-A-40 09 858 oder DE-A-44 37 535 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP-A-0 521 928, EP-A-0 522 420, EP-A-0 522 419, EP-A-0 730 613 oder DE-A-44 37 535 beschriebenen, oder Polyharnstoffe.

Die Auswahl der Bindemittel richtet sich insbesondere danach, daß es sich bei den erfindungsgemäß zu verwendenden Lacken um wäßrige Lacke handelt.

Des weiteren richtet sich die Auswahl der Bindemittel danach, ob es sich bei den erfindungsgemäß zu verwendenden Lacken um physikalisch härtende Lacke handelt. Bekanntermaßen erfolgt die physikalische Härtung durch Lösemittelabgabe aus der applizierten Lackschicht und/oder unter Koaleszenz von Bindemittelteilchen. Ergänzend wird hier zur auf Römpp Lexikon Lacke und Druckfarben, Georg Thieme Verlag, Stuttgart, New York, 1998, »Härtung«, Seiten 274 und 275, verwiesen.

Außerdem richtet sich die Auswahl der Bindemittel danach, ob es sich bei den erfindungsgemäß zu verwendenden Lacken um selbstvemetzende oder fremdvemetzende Lacke handelt. Bekanntermaßen bezeichnet der Begriff "selbstvemetzend" die Eigenschaft eines Bindemittels, mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind, wie Hydroxylgruppen und blockierte Isocyanatgruppen oder N-Methylolgruppen. Als fremdvemetzend werden dagegen solche Lacke bezeichnet, worin die eine Art der komplementären reaktiven funktionellen Gruppen, beispielsweise die Hydroxylgruppen, in dem Bindemittel, und die andere Art, beispielsweise die blockierten Isocyanatgruppen oder die N-Methylolgruppen, in einem Härter oder Vemetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen

Darüber hinaus richtet sich die Auswahl der Bindemittel nach dem Verwendungszweck. Der erfindungsgemäß zu verwendende Lack wird in der Automobilerst- und -reparaturlackierung als Füller oder als Basislack, insbesondere Wasserbasislack, im Rahmen des sogenannten Naß-in-naß-Verfahrens (vgl. beispielsweise das europäische Patent EP-B-0 089 497) zur Herstellung farb- und/oder effektgebender Mehrschichtlackierungen verwendet. Außerdem kommt er für die industrielle Lackierung, inklusive Coil Coating und Container Coating, sowie für die Möbellackierung in Betracht.

Der Fachmann kann daher die jeweils am besten geeigneten Bindemittel unter Berücksichtigung der Anforderungen, die mit der Form des erfindungsgemäß zu verwendenden Lacks bzw. mit seinem Aggregatzustand und seinem jeweiligen Verwendungszweck verbunden sind, aufgrund seines allgemeinen Fachwissens gegebenenfalls unter Zuhilfenahme einfacher Vorversuche leicht ermitteln. Gleiches gilt für den Gehalt der Bindemittel in den erfindungsgemäß zu verwendenden Lacken, der außerordentlich breit variieren kann und vorzugsweise bei 1,0 bis 99,499, bevorzugt 2,0 bis 98, besonders bevorzugt 3,0 bis 95, ganz besonders bevorzugt 4,0 bis 92 und insbesondere 5,0 bis 90 Gew.-%, jeweils bezogen auf den erfindungsgemäß zu verwendenden Lack, liegt.

Der erfindungsgemäß zu verwendende Lack kann dabei ein Einkomponenten(1K)-System sein.

Im Rahmen der vorliegenden Erfindung ist unter einem Einkomponenten(1K)-System ein thermisch härtender Beschichtungsstoff zu verstehen, bei dem das Bindemittel und das Vemetzungsmittel nebeneinander, d.h. in einer Komponente, vorliegen. Voraussetzung hierfür ist, daß die beiden Bestandteile erst bei höheren Temperaturen miteinander vemetzen.

Der erfindungsgemäß zu verwendende Lack kann des weiteren ein Zweikomponenten(2K)- oder Mehrkomponenten(3K, 4K)-System sein.

Im Rahmen der vorliegenden Erfindung ist hierunter ein erfindungsgemäß zu verwendender Lack zu verstehen, bei dem insbesondere das Bindemittel und das Vemetzungsmittel getrennt voneinander in mindestens zwei Komponenten vorliegen, die erst kurz vor der Applikation zusammengegeben werden. Diese Form wird dann gewählt, wenn Bindemittel und Vemetzungsmittel bereits bei Raumtemperatur miteinander reagieren, was bekanntermaßen bei der Verwendung von Hydroxylgruppen einerseits und Isocyanatgruppen andererseits der Falls ist. Erfindungsgemäß zu verwendende Lacke dieser Art werden vor allem zur Beschichtung thermisch empfindlicher Substrate, insbesondere in der Autoreparaturlackierung, angewandt.

Außer den vorstehend beschriebenen erfindungswesentlichen Bestandteilen kann der erfindungsgemäß zu verwendende Lack zusätzliche Pigmente in üblichen und bekannten Mengen enthalten.

Hierbei handelt es sich vor allem um Weißpigmente, insbesondere wenn es sich bei dem erfindungsgemäßen Lack um einen grauen Lack handelt. Geeignete Weißpigmente werden beispielsweise in Römpp Lexikon Lacke und Druckfarben, Georg Thieme Verlag, 1998, »Weißpigmente«, Seite 629, beschrieben.

Darüber hinaus kann der erfindungsgemäß zu verwendende Lack übliche und bekannte Effektpigmente, die als solche keine Buntheit hervorrufen, in wirksamen Mengen enthalten. Beispiele geeigneter Effektpigmente werden beispielsweise in Römpp Lexikon Lacke und Druckfarben, Georg Thieme Verlag, 1998, Seite 176, »Effektpigmente«; oder Seiten 380 und 381 »Metalloxid-Glimmer-Pigmente« bis »Metallpigmente«; beschrieben.

Außerdem kann der erfindungsgemäß zu verwendende Lack, insbesondere der fremdvemetzende erfindungsgemäß zu verwendende Lack, Vemetzungsmittel in üblichen und bekannten wirksamen Mengen enthalten.

Beispiele geeigneter Vemetzungsmittel sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestem und Polyisocyanaten oder von Estern und Teilestern mehrwertiger Alkohole der Malonsäure mit Monoisocyanaten, wie sie der europäischen Patentschrift EP-A-0 596 460 beschrieben werden.

Vemetzungsmittel dieser Art sind im Handel erhältlich.

Nicht zuletzt kann der erfindungsgemäß zu verwendende Lack übliche und bekannte Lackadditive in wirksamen Mengen enthalten.

Beispiele geeigneter Lackadditive sind organische und anorganische Füllstoffe, die als solche keine Buntheit hervorrufen, transparente Pigmente, thermisch härtbare Reaktiverdünner, niedrigsiedende und/oder hochsiedende organische Lösemittel ("lange Lösemittel"), UV-Absorber, Lichtschutzmittel, Radikalfänger, thermolabile radikalische Initiatoren, Katalysatoren für die Vernetzung, Entlüftungsmittel, Slipadditive, Polymerisationsinhibitoren, Entschäumer,
Emulgatoren, Netzmittel, Haftvermittler, Verlaufmittel, filmbildende Hilfsmittel, rheologiesteuemde Additive oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Die Herstellung des erfindungsgemäß zu verwendenden Lacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder nach den für die Herstellung der jeweiligen erfindungsgemäß zu verwendenden Lacke geeigneten Verfahren. Besondere Vorteile resultieren, wenn die erfindungsgemäß zu verwendenden Rußpigmente über Pigmentpasten eingearbeitet werden. Diese können bereits die erfindungsgemäß zu verwendenden Silicone oder einen Teil hiervon enthalten.

Der erfindungsgemäß zu verwendende Lack, insbesondere der erfindungsgemäße zu verwendende Wasserbasislack, dient der Herstellung von Lackierungen, insbesondere Mehrschichtlackierungen, auf grundierten oder ungrundierten Substraten.

Als Substrate kommen alle zu lackierenden Oberflächen in Betracht; das sind z. B. Metalle, Kunststoffe, Holz, Keramik, Stein, Textil, Faserverbunde, Leder, Glas, Glasfasem, Glas- und Steinwolle, mineral- und harzgebundene Baustoffe, wie Gips- und Zementplatten oder Dachziegel, sowie Verbunde dieser Materialien. Demnach ist die Lackierung auch für Anwendungen außerhalb der Automobillackierung geeignet. Hierbei kommt sie insbesondere für die Lackierung von Möbeln, die "Do-it-yourself"-Lackierung und die industrielle Lackierung, inklusive Coil Coating und Container Coating, in Betracht. Im Rahmen der "Do-it-yourself"-Lackierung und der industriellen Lackierung eignet sie sich für die Lackierung und Reparaturlackierung praktisch aller Teile für den privaten oder industriellen Gebrauch wie Radiatoren, Haushaltsgeräte, Kleinteile aus Metall wie Schrauben und Muttern, Radkappen, Felgen oder Emballagen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der Lackierung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation des erfindungsgemäß zu verwendenden Lacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder - anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikationen kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Lack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem erfindungsgemäß zu verwendenden Lack selbst, betrieben wird.

Im allgemeinen werden die erfindungsgemäß zu verwendenden Lacke in einer Naßschichtdicke appliziert, daß nach ihrer Aushärtung Schichten mit der für ihre Funktionen notwendigen und vorteilhaften Schichtdicken resultieren. Im Falle der Füllerlackierung liegt diese Schichtdicke bei 10 bis 150, vorzugsweise 10 bis 120, besonders bevorzugt 10 bis 100 und insbesondere 10 bis 90 µm, im Falle der Basislackierung liegt sie bei 5,0 bis 50, vorzugsweise 5,5 bis 40, besonders bevorzugt 6 bis 30 und insbesondere 10 bis 25 µm.

Die applizierten Füllerlackschichten und Basislackschichten werden thermisch gehärtet.

Bei dem Naß-in-naß-Verfahren werden die Basislackschichten, insbesondere Wasserbasislackschichten, nicht thermisch gehärtet, sondern vorgetrocknet und dann mit üblichen und bekannten Klarlacken überlackiert. Hiemach werden die Basislackschichten und die Klarlackschichten gemeinsam thermisch gehärtet, wobei die nachstehend beschriebenen Methoden angewandt werden. Hierdurch resultieren die Mehrschichtlackierungen.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhaftervveise erfolgt die thermische Härtung bei einer Temperatur von 50 bis 100 °C, besonders bevorzugt 60 bis 100 °C und insbesondere 80 bis 100 °C während einer Zeit von 1 min bis zu 2 h, besonders bevorzugt 2 min bis zu 1 h und insbesondere 3 min bis 45 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Die Lackierungen, insbesondere die Mehrschichtlackierungen, weisen ein hervorragendes Eigenschaftsprofil auf, das hinsichtlich der Mechanik, Optik, Korrosionsbeständigkeit und Haftung sehr gut ausgewogen ist. Insbesondere weisen die erfindungsgemäße Mehrschichtlackierungen eine hervorragenden D.O.I**.** (distinctiveness of the reflected image) und eine hervorragende Oberflächenglätte, auf.

### Beispiele und Vergleichsversuche

### Herstellbeispiel 1

### Die Herstellung einer Reibharzdispersion auf Polyurethanbasis

In einem Reaktionsgefäß, ausgerüstet mit einem Rührer, einem Rückflußkühler und 2 Zulaufgefäßen, wurden zu einer Mischung aus 77,6 Gewichtsteilen eines Polyesterdiols mit einem zahlenmittleren Molekulargewicht von 630 auf Basis von Adipinsäure, Hexandiol und Neopentylglykol, 9,3 Gewichtsteilen Neopentylglykol, 3,0 Gewichtsteilen Trimethylolpropanmonoallylether, 0,1 Gewichtsteilen Dibutylzinndilaurat und 110,2 Gewichtsteilen Methylisobutylketon 63,5 Gewichtsteile Isophorondüsocyanat hinzugegeben. Das resultierende Reaktionsgemisch wurde anschließend auf 105°C erhitzt. Bei einem Isocyanatgehalt von 1,8 Gew.% wurden 15,1 Gewichtsteile Trimethylolpropan zu dem Reaktionsgemisch hinzugegeben, und die Reaktion wurde so lange weiter geführt, bis keine freien Isocyanatgruppen mehr nachweisbar waren.

Zu der resultierenden Polyurethan-Lösung wurden bei 105°C eine Mischung aus 69,6 Gewichtsteilen n-Butylacrylat, 69,6 Gewichtsteilen Methylmethacrylat, 16,6 Gewichtsteilen Hydroxypropylmethacrylat und 13,0 Gewichtsteilen Acrylsäure innerhalb von drei Stunden hinzugegeben. Gleichzeitig wurden 5,1 Gewichtsteile terk.-Butylperethylhexanoat, gelöst in 42,8 Gewichtsteilen Methylisobutylketon innerhalb von 3,5 Stunden zudosiert Nach weiteren 2,5 Stunden bei 105°C wurde das Reaktionsgemisch auf 90°C abgekühlt. Anschließend wurden 10,6 Gewichtsteile Dimethylethanolamin und 483,2 Gewichtsteile deionisiertes Wasser zugegeben. Nach dem Entfernen des Methylisobutylketons im Vakuum erhielt man eine stabile Polyurethandispersion mit einem Feststoffgehalt von 43 Gew.% und einem pH-Wert von 7,9.

### Herstellbeispiel 2

### Die Herstellung einer Bindemitteldispersion

In einem für die radikalische Copolymerisation geeigneten 4 1-Stahlreaktor mit Dosieraufsätzen und Rückflußkühler wurden 583 Gewichtsteile Propanol vorgelegt und auf 95°C erhitzt. Während 5 Minuten wurde eine Mischung aus 2,2 Gewichtsteilen Trigonox® 421 (Initiator der radikalischen Polymerisation der Firma Akzo) und 13 Gewichtsteilen Propanol hinzugegeben. Gleichzeitig wurde gleichmäßig während 2 Stunden eine Mischung aus 83,2 Gewichtsteilen Acrylsäure, 240 Gewichtsteilen Styrol und 290 Gewichtsteilen Butylacrylat sowie 3.5% einer Mischung aus 181 Gewichtsteilen Trigonox® und 181 Gewichtsteilen Propanol während 30 min zudosiert. Anschließend wurde die resultierende Reaktionsmischung während weiteren 20 min auf 95°C erhitzt.

Hiernach wurde gleichmäßig über 2 Stunden eine Mischung aus 86,2 Gewichtsteilen Styrol und 115 Gewichtsteilen n-Butytacrylat sowie - gleichzeitig beginnend - 6,2% der Mischung aus 181 Gewichtsteilen Trigonox® und 181 Gewichtsteilen Propanol während einer Stunde zudosiert. Nach Beendigung beider Zuläufe wurde die Reaktionsmischung während einer Stunde nachpolymersiert.

Im Anschluß daran wurde gleichmäßig während 4 Stunden eine Mischung aus 180 Gewichtsteilen Methylmethacrylat, 315 Gewichtsteilen Styrol und 495 Gewichtsteilen n-Butylacrylat sowie - gleichzeitig beginnend - 48,1% der Mischung aus 181 Gewichtsteilen Trigonox® und 181 Gewichtsteilen Propanol während 4 Stunden zudosiert.

Abschließend wurden 42,2% der Mischung aus 181 Gewichtsteilen Trigonox® und 181 Gewichtsteilen Propanol während 2 Stunden zudosiert.

Nach der Beeindigung der Zuläufe wurde die Temperatur der Reaktionsmischung während weiteren 1,5 Stunden bein 95°C gehalten.

Die resultierende Lösung wies einen Festkörpergehalt won 70,6 Gew.-% (2 g Einwaage + 2 g Xylol; 1 Stunde bei 130°C) und eine Säurezahl von 41,8 mg KOH/g auf. Die Lösung wurde mit 75,6 Gewichtsteilen 25%igern wässrigem Ammoniak und Isopropanol auf einen Festkörpergehalt von 37 Gew.-% eingestellt. Die Viskosität der verdünnten Lösung lag bei 4,4 dPas. Das Copolymersiat wies ein zahlenmittleres Molekulargewicht Mn von 15.981 und ein massenmittleres Molekulargewicht Mw von 53.316 (bestimmt durch Gelpermeationschromatographie mit Polystyrol als internem Standard) auf.

### Beispiel 1 und Vergleichsversuch V1

### Die Herstellung eines tiefschwarzen erfindungsgemäß zu verwendenden Lacks (Beispiel 1) und eines nichterfindungsgemäß zu verwendenden Lacks (Vergleichsversuch V1)

Für das Beispiel 1 wurden 30 Gewichtsteile der Bindemitteldispersion des Herstellbeispiels 2 vorgelegt. Hierzu wurden unter Rühren 4,4 Gewichtsteile Propanol, 0,4 Gewichtsteile eines handelsüblichen Netzmittels auf der Basis eines Phosphorsäurehatbesters (Pigmentverteiler LR 8807 der Firma BASF AG) und 0,4 Gewichtsteile einer technischen Ammoniaklösung unter Rühren zugegeben.

0,3 Gewichtsteile eines handelsüblichen Emulgators (Surfynol® 104 E, 50%ig in Ethylengylkol), 0,05 Gewichtsteile Natriumnitrit und 6,45 Gewichtsteile deionisiertes Wasser wurden miteinander gemischt und die resultierende Mischung wurde zu der vorstehend beschriebenen Mischung unter Rühren hinzugefügt

Die resultierende Mischung wurde unter starkem Rühren mit 2,2 Gewichtsteilen amorphem Kohlenstoffschwarz (Ruß Printex U® der Firma Degussa), 0,7 Gewichtsteilen pyrogener Kieselsäure (Aerosil® 200 CV), 12 Gewichtsteilen gefälltem Bariumsulfat (Blanc Fixe® Micro der Firma Sachtleben) und 4 Gewichtsteilen Propanol versetzt.

Die resultierende Mischung wurde auf einer horizontalen Rührwerksmühle (Mahlkörper SAZ ER; 1,6 - 2,5 mm Durchmesser, Si-Zr-Perlen) bei einer maximalen Temparatur von 50°C bis zu einer Kömigkeit nach Hegmann von 13 bis 15 µm (Keil 25µm) vermahlen.

Die Rührwerksmühle wurde zunächst mit 10,5 Gewichtsteilen Wasser und anschließend mit 10,5 Gewichtsteilen Propanol nachgespült. Anschließend wurden zu der Mischung 18 Gewichtsteile der Bindemitteldispersion des Herstellbeispiels 2 sowie 0,1 Gewichtsteile des Silicons Tego Glide® 410 (100%ig) der Firma Tego Chemie GmbH hinzugefügt.

Der pH-Wert der resultierenden erfindungsgemäßen Vormischung wurde mit Ammoniak, auf 8,7 bis 9,0 eingestellt. Die Viskosität der erfindungsgemäßen Vormischung wurde mit einem Gemisch aus Propanol und Wasser (1:1) auf 40 s im DIN 4-Auslaufbecher eingestellt.

74,4 Gewichtsteile dieser Vormischung wurden mit 53,9 Dimethylether vermischt und appliziert. Die resultierende Lackierung wurde farbmetrisch vermessen.

Für den Vergleichsversuch V 1 wurde das Beispiel 1 wiederholt, nur daß kein Silicon verwendet wurde. Die resultierende Lackierung wurde gleichfalls farbmetrisch vermessen. Die hierbei erhaltenen Werte wurden als Standard definiert.

In der Tabelle 1 werden die Abweichungen der bei Beispiel 1 erhaltenen farbmetrischen Ergebnisse vom Standard angegeben. Hierbei ergibt sich eine deutliche Farbtonverschiebung gegenüber dem Standard, d. h., der Farbton wird reiner und tiefer.

**Tabelle 1: Farbabstände Im Clelab-Farbenraum (Lichtart: D65)**

| **Beispiel Nr.** | **dL*** | **da*** | **db*** | **dC*** | **dH*** | **dE*** |
|---|---|---|---|---|---|---|
| 1 | 0,2 | -0,1 | -0.3 | 0,3 | -0.1 | 0,4 |
| V1 | Standard | | | | | |

### Beispiel 2 und Vergleichsversuch V2

### Die Herstellung eines tiefschwarzen erfindungsgemäß zu verwendenden Lacks und einer daraus hergestellten Mehrschichtlackierung (Beispiel 2) und eines nicht erfindungsgemäß zu verwendenden Lacks und einer daraus hergestellten Mehrschichtlacklerung (Vergleichsversuch V2)

Für das Beispiel 2 und den Vergleichsversuch V2 wurde zunächst eine Schwarzpaste hergestellt. Hierzu wurden 52 Gewichtsteile der Reibharzdispersion gemäß Herstellbeispiel 1 vorgelegt. Zu dieser Dispersion wurden 13 Gewichtsteile eines handelsüblichen Dispergiermittels (Disperbyk® 184 der Firma Byk Chemie), 10 Gewichtsteile eines Rußpigments (Monarch® 1400), 7,0 Gewichtsteile einer 10 %igen Diethanolamin-Lösung und 18 Gewichtsteile deionisiertes Wasser unter Rühren zugegeben. Die resultierende Mischung wurde während 30 Minuten vordispergiert. Anschließend wurde sie auf einer Rührwerksmühle (Mahlkörper: 1,0 mm; Füllgrad: 75%) gemahlen, bis ein Energieeintrag von 0,6 Kilowattstunde/kg erreicht war.

Für die Herstellung der Wasserbasislacke wurde zunächst ein Auflackgemisch hergestellt.

Hierzu wurden 21,4 Gewichtsteile einer Thixotropierungsmittellösung auf Basis eines synthetischen Schichtsilikats (3%ig in deionisiertem Wasser) vorgelegt und während zehn Minuten mit Hilfe eines Dissolvers bei maximaler Rührergeschwindigkeit vordissolvert. Danach wurden 39,0 Gewichtsteile der Reibharzdispersion gemäß Herstellbeispiel 1 und danach 0,6 Gewichtsteile eines handelsüblichen Entschäumers auf Basis einer Kombination von flüssigen Kohlenwasserstoffen, hydrophober Kieselsäure, synthetischen Copolymerisaten und nicht ionogenen Emulgatoren zugegeben. Zu der resultierenden Mischung wurden 3,0 Gewichtsteile Butyldiglykol, 1,5 Gewichtsteile Butylglykol, 5,0 Gewichtsteile Shellsol® T, 5,0 Gewichtsteile N-Methylpyrrolidon und 2,5 Gewichtsteile Ethylhexanol zugesetzt. Anschließend wurden 5,0 Gewichtsteile einer handelsüblichen Netzmittel-Lösung auf Basis von Acetylendiol (12,5 %ig im Butyldiglykol) und 2,5 Gewichtsteile Polypropylenglykolen zugefügt. Um den pH-Wert auf 7,8 bis 8,5 einzustellen, wurden noch 3,0 Gewichtsteile einer 10 %igen Aminlösung hinzugegeben, wonach mit 11,5 Gewichtsteilen deionisiertem Wasser der den gewünschte Festkörpergehalt eingestellt wurde, wodurch das Auflackgemisch resultierte.

61,5 Gewichtsteile des vorstehend beschriebenen Auflackgemischs wurden vorgelegt. Hierzu wurden 20,0 Gewichtsteile der vorstehend beschriebenen Schwarzpaste und 0,1 Gewichtsteile eines handelsüblichen Siliconöls (Tego Glide® 450 von der Firma Tego Chemie GmbH, 100 %ig) unter Rühren hinzugegeben. Anschließend wurde die resultierende Mischung mit 7,3 Gewichtsteilen eines handelsüblichen Melaminharzes (Cymel® 327, 90 %ig) und mit 11,1 Gewichtsteilen deionisiertem Wasser unter Rühren versetzt. Die resultierende Mischung wurde während 30 Minuten mit maximaler Rührergeschwindigkeit gerührt und mit 10 %iger Dimethylethanolamin-Lösung auf einen pH-Wert 7,8 eingestellt. Die Spritzviskosität des Wasserbasislacks wurde mit deionisiertem Wasser auf 28 s im DIN 4-Auslaufbecher eingestellt.

Für die Herstellung des nicht erfindungsgemäß zu verwendenden Wasserbasislacks des Vergleichsversuchs V2 wurde das Beispiel 1 wiederholt, nur daß kein Siliconöl zugesetzt wurde.

Für die Herstellung der Mehrschichtlackierungen wurden zunächst Prüftafeln hergestellt. Hierzu wurden Stahltafeln (Karosseriebleche), die mit einer üblichen und bekannten kathodisch abgeschiedenen und eingebrannten Elektrotauchlackierung beschichtet waren, mit einem handelsüblichen Füller beschichtet, wonach die resultierende Füllerschicht während 5 Minuten bei 20 °C und einer relativen Luftfeuchtigkeit von 65% abgelüftet und in einem Umluftofen während 5 Minuten bei 80 °C getrocknet und anschließend bei 150°C eingebrannt wurde. Hiernach wies die Füllerschicht eine Trockenschichtdicke von 30 bis 35 µm auf.

Nach dem Abkühlen der Prüftafeln auf 20 °C wurden der erfindungsgemäß zu verwendende Wasserbasislack des Beispiels 1 und der nicht erfindungsgemäß zu verwendende Wasserbasislack des Vergleichsversuchs V2 appliziert, während 5 Minuten bei 20 °C und einer relativen Luftfeuchtigkeit von 65% abgelüftet und in einem Umluftofen während 10 Minuten bei 80 °C getrocknet, so daß die getrockneten Basislackschichten eine Trockenschichtdicke von etwa 15 µm aufwiesen.

Auf die Basislackschichten des Beispiels 2 und des VergleichsversuchsV2 wurde ein handelsüblicher Zweikomponentenklarlack appliziert, wonach die Basislackschichten und die Klarlackschichten des Beispiels 2 und des Vergleichsversuchs V2 während 30 Minuten bei 130°C eingebrannt wurden. Die resultierenden Mehrschichtlackierungen wurden farbmetrisch vermessen. Die erhaltenen Ergebnisse finden sich in der Tabelle 2. Sie zeigen, daß die Mehrschichttackierung 2 ein tieferes Schwarz aufwies als die Mehrschichtlackierung V2.

**Tabelle 2: Schwarzmessung nach Lippok/Lohmer (DIN 55979)**

| **Beispiel** | **Schwarzzahlen nach DIN 55979:** | |
|---|---|---|
| **Nr.** | **M_{c}** | **M_{y}** |
| 2 | 293 | 289 |
| V2 | 277 | 279 |

## Patentansprüche

1. Verwendung eines unbunten wässrigen Lacks, enthaltend mindestens ein Bindemittel, mindestens ein Rußpigment und mindestens ein Silicon als Füller oder Basislack.

2. Verwendung eines unbunten wässrigen Lacks nach Anspruch 1 in der Automobilerst- und -reparaturlackierung, der "Do-it-yourself-Lackierung, der industriellen Lackierung, inklusive Container Coating und Coil Coating, sowie der Möbellackierung.

3. Verwendung eines unbunten wässrigen Lacks nach Anspruch 1 oder 2, **dadurch gekennzeichnet, dass** es ein Wasserbasislack ist.

4. Verwendung eines unbunten wässrigen Lacks nach einem der Ansprüche 1 bis 3, **dadurch gekennzeichnet, dass** er bezogen auf seine Gesamtmenge 0,01 bis 2,0 Gew.-% Silicon enthält.

5. Verwendung eines unbunten wässrigen Lacks nach einem der Ansprüche 1 bis 4, **dadurch gekennzeichnet, dass** mindestens ein niedrigviskoses oder hochviskoses Siliconöl verwendet wird.

6. Verwendung eines unbunten wässrigen Lacks nach einem der Ansprüche 1 bis 5, **dadurch gekennzeichnet, dass** es sich um einen tiefschwarzen Lack handelt.

7. Verwendung eines unbunten wässrigen Lacks nach einem der Ansprüche 1 bis 6, **dadurch gekennzeichnet, dass** er mindestens ein Weißpigment, mindestens ein Effektpigment, mindestens ein Vernetzungsmittel und/oder mindestens ein Lackadditiv enthält.

## Claims

1. Use of an achromatic aqueous paint comprising at least one binder, at least one carbon black pigment, and at least one silicone as surfacer or basecoat material.

2. Use of an achromatic aqueous paint according to Claim 1 in automotive OEM finishing and automotive refinish, in do-it-yourself painting, in industrial coating, including container coating and coil coating, and in furniture coating.

3. Use of an achromatic aqueous paint according to Claim 1 or 2, **characterized in that** it is an aqueous basecoat material.

4. Use of an achromatic aqueous paint according to any of Claims 1 to 3, **characterized in that** it contains, based on its overall amount, from 0.01 to 2.0% by weight of silicone.

5. Use of an achromatic aqueous paint according to any of Claims 1 to 4, **characterized in that** at least one low-viscosity or high-viscosity silicone oil is used.

6. Use of an achromatic aqueous paint according to one of Claims 1 to 5, **characterized in that** it is a jet black paint.

7. Use of an achromatic aqueous paint according to one of Claims 1 to 6, **characterized in that** it comprises at least one white pigment, at least one effect pigment, at least one crosslinking agent and/or at least one paint additive.

## Revendications

1. Utilisation d'une peinture achromatique à l'eau, contenant au moins un liant, au moins un pigment noir de carbone et au moins un silicone comme apprêt de garnissage ou peinture de fond.

2. Utilisation d'une peinture achromatique à l'eau selon la revendication 1, dans la première mise en peinture et le peinturage de réparation d'automobiles, le peinturage à faire soi-même "Do-it-yourself", le peinturage industriel, y compris le peinturage de récipients *"Container Coating"* et le peinturage de rubans continus *"Coil Coating"* ainsi que le peinturage de meubles.

3. Utilisation d'une peinture achromatique à l'eau selon la revendication 1 ou 2, **caractérisée en ce qu'**elle est une peinture de fond à l'eau.

4. Utilisation d'une peinture achromatique à l'eau selon l'une quelconque des revendications 1 à 3, **caractérisée en ce qu'**elle contient, par rapport à sa quantité totale, de 0,01 à 2,0 % en poids de silicone.

5. Utilisation d'une peinture achromatique à l'eau selon l'une quelconque des revendications 1 à 4, **caractérisée en ce qu'**elle contient au moins une huile de silicone peu visqueuse ou très visqueuse.

6. Utilisation d'une peinture achromatique à l'eau selon l'une quelconque des revendications 1 à 5, **caractérisée en ce qu'**il s'agit d'une peinture noir profond.

7. Utilisation d'une peinture achromatique à l'eau selon l'une quelconque des revendications 1 à 6, **caractérisée en ce qu'**elle contient au moins un pigment blanc, au moins un pigment à effet, au moins un agent de réticulation et/ou au moins un additif pour peintures.
